# EUROPEAN PATENT SPECIFICATION

(11) **EP 2 365 434 B1**
(45) Date of publication and mention of the grant of the patent: **30.09.2015**
(21) Application number: 11000381.1
(22) Date of filing: 19.01.2011
(51) Int. Cl.: G06F 11/36, G06F 11/34, G06F 9/455

(54) **Method for accessing user interface elements of running third party applications on symbian based mobile device**
Verfahren für den Zugriff auf Benutzerschnittstellenelemente von laufenden Drittanwendungen auf Symbian-basierten Mobilvorrichtungen
Procédé d'accès à des éléments d'interface utilisateur d'applications tierces en cours d'exécution sur un dispositif mobile d'exploitation

(30) Priority: 18.02.2010 IL 20405010
(43) Date of publication of application: 14.09.2011
(73) Proprietor: Deutsche Telekom AG, 53113 Bonn (DE)
(72) Inventor: Mimran, David, Tel Aviv 64516 (IL); Shapira, Bracha, Beer Sheva 84728 (IL)
(74) Representative: Flaccus, Rolf-Dieter

(56) References cited:
- EP-A1- 1 936 495
- US-A1- 2005 257 196
- US-A1- 2005 278 728
- US-B1- 6 968 509
- Anonymous: "Microsoft UI Automation", Wikipedia , 15 February 2010 (2010-02-15), XP002644455, Retrieved from the Internet: URL:http://en.wikipedia.org/w/index.php?ti tle=Microsoft_UI_Automation&oldid=34429319 3 [retrieved on 2011-06-23]

## Description

### Field of the Invention

The present invention relates to the field of querying running applications on mobile devices. More particularly, the invention relates to querying data elements of currently running applications on devices using a Symbian operating system.

### Background of the Invention

In recent years the number and variety of the applications supported by digital devices has significantly increased. In addition to the hunger of customers for new stimulating applications, operators and service providers share a strong desire that customers will exploit the applications provided to them. The profit of operators and service providers is directly proportional to the frequency of using their applications. Thus, a drop in usage generally results in a drop in profits.

The quality of an application is often determined by the customer's use of it. Typically, the quality of an application is evaluated in terms of how well it is designed, if it is free of defects, and how long-lasting it remains in use by customers. While these are critical components for the evaluation of quality, it is important to realize that if a customer considers a product as difficult to use or not "friendly", he will most likely not use it enough to find out how well it is designed, or to explore all the options that it provides. A term which is often used to describe the quality of a product from the user's perspective, particularly with respect to computer products, is the term "user friendly".

Several methods exist for evaluating the quality of an application. Typically these methods generate a model describing the goals supported by the application and analyze sequences of actions executed by users for evaluating the quality of the user-system interaction. When the user opens an application on a digital device, he usually has a task in mind that he wishes to complete - for example, sending an Instant Message or adding a contact to the phone contact list. In order to perform such tasks, the user interactively goes through a series of screens until the task is completed. Every screen is composed of elements - some of which are Screen Input Elements (SIE) which are used for data input and advancing the user to other screens, while others are Screen Elements (SE) which are presented on the screen. The entire group of elements presented on the user's device is referred to hereinafter as User Interface Elements (UIE).

In many cases the UIE are not available to a third party application. Thus, there is no way to collect information regarding the user steps and the elements presented to him on the device screen. One of these cases is devices that operate using the Symbian Operating System (OS). The Symbian OS has tight control measures which prevent a third party application to access the memory space or other properties of a currently running visible application on the Symbian OS. Therefore, user sequences and other data regarding the user-system interaction can not be collected.

It is an object of the present invention to provide a method for monitoring and collecting data from currently visible running applications on Symbian based mobile devices.

It is another object of the present invention to allow a third party to access the currently visible running process space, on Symbian based mobile devices.

It is yet another object of the present invention to provide a method for querying data of currently visible running applications and windows on Symbian based mobile devices.

Other objects and advantages of the invention will become apparent as the description proceeds.

### Summary of the Invention

The invention is directed to a method for monitoring and accessing User Interface elements of a currently running third party application on a Symbian operating system (OS) based device, comprising:
(a) loading a code segment through a Front End Processor Dynamically Loaded Library (FEP DLL) into the process space of said currently running application;
(b) executing, by means of said code segment, a Symbian Application Programming Interface (API) call for finding the object handler of the top focused User Interface Element (UIE) on the currently visible device screen;
(c) traversing up the parenting chain to reach the top level parent control which is the top window handler on the currently visible screen; and
(d) performing steps (b) and (c) for each screen created and using said handler for capturing the object handler of the top focused User Interface Element (UIE) of the currently visible screen.

Embodiments of the invention are further provided wherein the code segment is used to access the captured User Interface Element of the currently visible screen to enable at least one of the following steps:
(a) identifying the structure of third party application screens;
(b) modifying screens at runtime as part of a flexible User Interface (UI) architecture;
(c) providing in context help; and
(d) recording user interaction with the currently running application.

### Brief Description of the Drawings

In the drawings:
- Fig. 1 is a flow chart describing the process for collecting data from currently visible running applications; and
- Fig. 2 schematically illustrates the process operating environment.

### Detailed Description of the Invention

Several operating systems, such as Symbian prevent third parties from collecting information regarding the steps of a user and the elements presented to him over his device's screens. The present invention provides means for monitoring and collecting such information from applications running on a digital device which are currently visible to the user. By exploiting the Front End Processor (FEP) available in Symbian based devices a code is loaded into the memory of the running application. The code executes a Symbian application programming interface (API) call and provides access to the UIE presented on the currently visible screen.

The present invention uses the FEP mechanism existing in the Symbian operating system. The FEP mechanism is designed to allow extension of a third party input capabilities. For example input capabilities such as virtual keyboards or touch screens can be extended to be activated in foreground applications. The FEP is a special kind of Dynamically Loaded Library (DLL). This library is loaded into the process space of every application that is running on Symbian with a user interface. The FEP is loaded once per process creation and a specific function within the FEP is called during the creation of each application window.

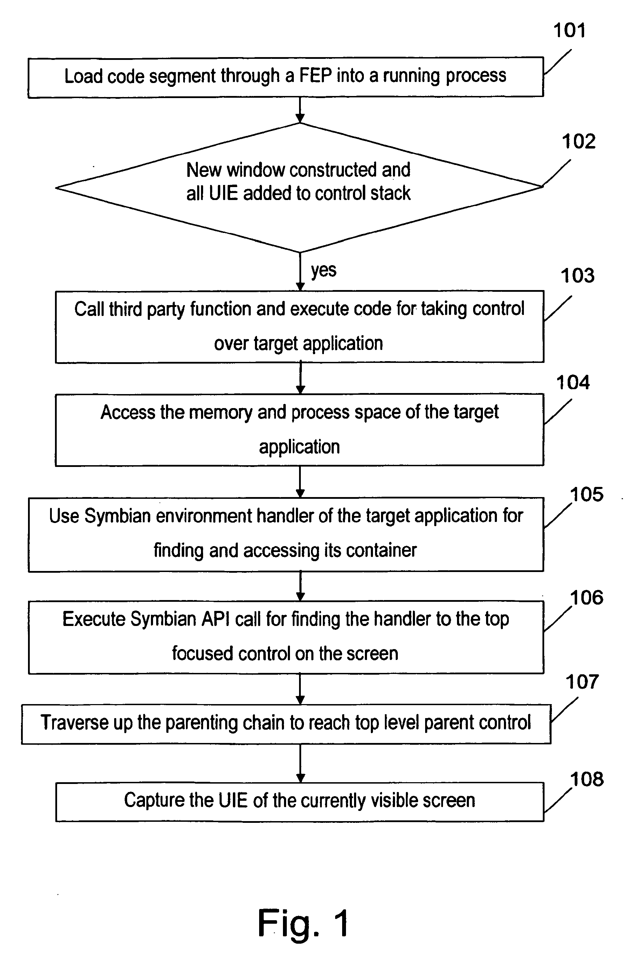

Fig. 1 is a flow chart describing the process for collecting data from currently visible running applications. In the first step 101 a code segment of a third party is loaded into a currently running process. The code segment is loaded through the FEP mechanism to the thread of creating a new window. In step 102 the code segment waits while a new window into which all UIE on the screen are added to the top window control stack is constructed. For every new screen created on the target application a FEP custom function call is performed (step 103). This function contains the third party code for taking control over the target application. As an example of methods that give the FEP control during the third party execution, according to one embodiment the function that is used for taking control over the target application is "HandleChangeInFocus". This event is called whenever a window element receives the focus of the user input. As mentioned herein above, this function is called only after the stack control is filled. When this function is called the code in the function is called uses for taking control over the target application.

In the next step 104, a simple access to a memory and process space of the target application is performed. The code executed in step 103 is able to gain control due to the fact that it runs in the memory space of the target application. Once the code gains control of the application, step 105 is executed. In step 105 a target application environment handler, which is a unique id that each screen and process in Symbian receives when it is created, is used for querying different data on the running application and windows. The basic environment handler that is accessible is used for finding out the target application container, which is an object assigned for each specific Symbian application. The target application container holds detailed data on the target application.

In step 106 a standard Symbian API call is executed for finding the object handler of the top focused control, i.e. a window element such as input, text, button etc. on the screen. Once the object handler of the top focused control on the screen is received, the natural relationship between controls and parent windows on Symbian is exploited. This relationship is a parent-child relationship that ensures that control has parent controls until the top parent that does not have a parent attribute. This control is actually the top level window object handler.

Another way of describing what takes place in step 106 is the following: Symbian screens are constructed as a tree where the top level containers are higher tree intersections and internal elements are either a leaf or a branch. To find out the top level branch of the tree the mechanism of the invention captures a single element on screen and traverses up the tree until it reaches the top level branch available.

In step 107 the top level window object handler is reached by traversing up the chain of parenting from the top focused control to the top parent control. The top parent control is the top window handler on the currently visible screen.

From this point the code segment executed (in step 108) can access the UIE of the target screen in a number of ways that are available to an application developer as if the code segment were written by the developer itself. For example code segment functions provide access to the captured UIE of the currently visible screen. Such access may be used for identifying third party application screens structure, modifying screens at runtime as part of a flexible UI architecture, providing in place services such as context help, and recording user interaction with currently running application.

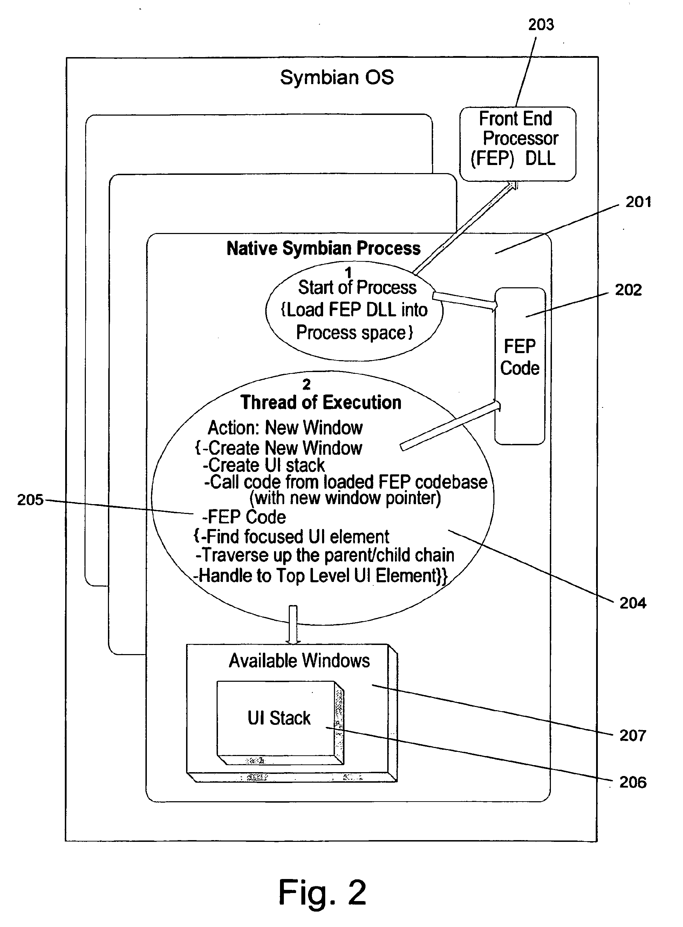

Fig. 2 schematically illustrates an embodiment of the process operating environment. In the beginning of the native Symbian process 201, a FEP code 202 is loaded from the FEP DLL 203 into the process space. Upon creation of each new window, the thread for creating a new window 204 calls the code functions from the FEP code 202. A FEP code function 205 is loaded into the thread of creating a new window. The FEP code function is executed and provides access to the stack which stores all the UIE of the available window currently visible on the device's screen.

While some embodiments of the invention have been described by way of illustration, it will be apparent that the invention can be carried out with many modifications, variations and adaptations, and with the use of numerous equivalents or alternative solutions that are within the scope of persons skilled in the art, without departing from the the scope of the appended claims.

## Claims

1. A method for monitoring and accessing User Interface elements of a currently running third party application on a Symbian Operating System (OS) based device, comprising:
(a) loading a code segment through a Front End Processor Dynamically Loaded Library (FEP DLL) into the process space of said currently running application;
(b) executing, by means of said code segment, a Symbian Application Programming Interface (API) call for finding the object handler of the top focused User Interface Element (UIE) on the currently visible device screen;
(c) traversing up the parenting chain to reach the top level parent control which is the top window handler on the currently visible screen; and
(d) performing steps (b) and (c) for each screen created and using said handler for capturing the object handler of the top focused User Interface Element (UIE) of the currently visible screen.

2. A method according to claim 1, wherein the code segment is used to access the captured User Interface Element of the currently visible screen to enable at least one of the following:
(a) identifying the structure of third party application screens;
(b) modifying screens at runtime as part of a flexible User Interface (UI) architecture;
(c) providing in context help; and
(d) recording user interaction with the currently running application.

## Patentansprüche

1. Verfahren zur Überwachung von und den Zugriff auf Benutzerschnittstellenelemente einer gerade laufenden Drittanwendung auf einer auf dem Symbian-Betriebssystem (OS) basierenden Vorrichtung, umfassend:
(a) Laden eines Code-Segments durch eine Front-End-Prozessor-dynamisch-geladene-Bibliothek (FEP DLL) in den Prozessraum der gerade laufenden Anwendung,
(b) Ausführen eines Symbian-Anwendungsprogrammierschnittstellen-(API)-Aufrufs, mittels des Code-Segments, um den Objekt-Handler des obersten fokussierten Benutzerschnittstellenelementes (UIE) auf dem gerade sichtbaren Vorrichtungsbildschirm zu finden,
(c) Durchlaufen der Elternkette nach oben, um die Elternsteuerung der obersten Ebene zu erreichen, die der Handler des obersten Fensters auf dem gerade sichtbaren Bildschirm ist, und
(d) Durchführen der Schritte (b) und (c) für jeden erzeugten Bildschirm und Verwenden des Handlers zur Erfassung des Objekt-Handlers des obersten fokussierten Benutzerschnittstellenelements (UIE) des gerade sichtbaren Bildschirms.

2. Verfahren nach Anspruch 1, bei dem das Code-Segment für den Zugriff auf das erfasste Benutzerschnittstellenelement des gerade sichtbaren Bildschirms verwendet wird, um wenigstens eine der folgenden Operationen zu ermöglichen:
(a) Identifizieren des Aufbaus von Drittanwendungsbildschirmen,
(b) Modifizieren von Bildschirmen während der Laufzeit als Teil einer flexiblen Benutzerschnittstellen-(UI)-Architektur,
(c) Bereitstellen von Kontext-Hilfe, und
(d) Aufzeichnen von Benutzerinteraktionen mit der gerade laufenden Anwendung.

## Revendications

1. Procédé de surveillance et d'accès à des éléments d'interface utilisateur d'une application tierce en cours d'exécution sur un appareil basé sur le système d'exploitation (OS) Symbian, comprenant :
(a) le chargement d'un segment de code à travers une bibliothèque chargée dynamiquement d'un processeur frontal (FEP DLL) dans l'espace de traitement de ladite application en cours d'exécution ;
(b) l'exécution, au moyen dudit segment de code, d'un appel d'interface de programmation d'application (API) Symbian pour trouver le gestionnaire d'objet de l'élément d'interface utilisateur (UIE) au premier plan sur l'écran de dispositif actuellement visible ;
(c) le passage de la chaine parentale pour atteindre le contrôle parent de plus haut niveau qui est le gestionnaire de fenêtres supérieures sur l'écran actuellement visible ; et
(d) la réalisation des étapes (b) et (c) pour chaque écran créé et l'utilisation dudit gestionnaire pour capturer le gestionnaire d'objet de l'élément d'interface utilisateur (UIE) au premier plan de l'écran actuellement visible.

2. Procédé selon la revendication 1, dans lequel le segment de code est utilisé pour accéder à l'élément de l'interface utilisateur capturé de l'écran actuellement visible pour permettre au moins l'une des actions suivantes :
(a) identification de la structure d'écrans d'applications tierces ;
(b) modification d'écrans en cours d'exécution en tant qu'élément d'une architecture d'une interface utilisateur (UI) flexible ;
(c) fourniture d'une aide contextuelle ; et
(d) enregistrement de l'interaction avec l'utilisateur avec l'application en cours d'exécution.
